# EUROPÄISCHE PATENTSCHRIFT

(11) **EP 3 176 629 B1**
(45) Veröffentlichungstag und Bekanntmachung des Hinweises auf die Patenterteilung: **11.12.2019**
(21) Anmeldenummer: 16169653.9
(22) Anmeldetag: 13.05.2016
(51) Int. Cl.: G02C 13/00, G02C 1/02

(54) **BEFESTIGUNG EINES KONSTRUKTIONSTEILS AN EINEM BRILLENGLAS**
FIXING A STRUCTURAL PART TO AN EYEGLASS LENS
FIXATION D'UN COMPOSANT SUR UNE VERRE DE LUNETTE

(30) Priorität: 03.12.2015 CH 17642015
(43) Veröffentlichungstag der Anmeldung: 07.06.2017
(73) Patentinhaber: götti SWITZERLAND GmbH, 8820 Wädenswil (CH)
(72) Erfinder: Götti, Sven, 8002 Zürich (CH)
(74) Vertreter: Keller & Partner Patentanwälte AG

(56) Entgegenhaltungen:
- EP-B1- 1 127 289
- WO-A2-03/083553
- CN-Y- 2 610 357
- FR-A- 1 069 240
- FR-A1- 2 880 138
- JP-A- 2000 089 169
- US-A1- 2005 275 793
- US-A1- 2013 128 218
- US-A1- 2015 316 784
- US-B1- 6 409 337
- Breitfeld & Schliekert GmbH: "Tipps & Tricks Ein- & Auspresszange / Tips & Tricks Sleeves pressing / removing pliers", Youtube, 23 January 2013 (2013-01-23), page 1 pp., XP054978719, Retrieved from the Internet: URL:https://www.youtube.com/watch?v=tRuEL2 RfjTs [retrieved on 2018-09-27]

## Beschreibung

### Technisches Gebiet

Die Anmeldung bezieht sich auf eine Befestigung eines Konstruktionsteils an einem Brillenglas.

### Stand der Technik

Gläser und Fassungsteile einer Brille werden üblicherweise mittels Schrauben, Schraubhülsen und Muttern miteinander verbunden. Eine Sicherung gegen Verdrehen wird meist durch Befestigung in zwei Bohrungen oder über Stifte und Kerben am Glasrand erzielt. Brillenglasbefestigungen mit einer Schraubverbindung haben den Nachteil, dass bei einer zu festen Verschraubung eine starke punktuelle Spannung im Brillenglas entsteht, wodurch ein hohes Bruchrisiko besteht. Bei zu lockerer Verbindung ist die Brillenfassung nicht formstabil, wodurch der Sitz sowie der Sehkomfort beeinträchtigt werden. Bei täglichem Gebrauch wird eine Schraubverbindung permanent beansprucht. Durch diese Reibung kann sich die Schraube selbständig lösen und gar herausfallen.

Ein in der EP 0 546 589 A1 (P. J. Lindberg) beschriebenes Verfahren stellt das Einsetzen von U-förmig gebogenem Draht in Langlöcher im Glas dar. Hierbei wird das Ende des Drahts so gebogen, dass die beiden Schenkel der U-Form Spannung nach aussen auf die Ränder des Langlochs ausüben. Bei diesem Verfahren wird jedoch oftmals so viel Spannung auf das Glas ausgeübt, dass das Bruchrisiko desselben massiv ansteigt.

Die EP 0 561 763 A1 (Silhouette International Ges.m.b.H.) beschreibt eine Lösung zur Befestigung metallischer Konstruktionsteile an einem Brillenglas ohne Schrauben. Hierbei werden an einem den Glasrand übergreifenden Endsteg zwei abstehende, parallele Befestigungsstifte angelötet oder angeschweisst, die mit im Querschnitt widerhakenartigen Ringwülsten versehen sind und in zwei randnahen Bohrungen des Brillenglases gehalten werden. Zum Zweck der Fixierung und des Spannungsausgleichs zwischen Brillenglas und Konstruktionsteil werden Kunststoffhülsen eingesetzt. Bei diesem Verfahren besteht jedoch die Gefahr, dass die Kunststoffhülsen auf der dem Konstruktionsteil gegenüber liegenden Seite aus dem Brillenglas gezogen werden könnten. Eine Weiterentwicklung dieser Idee wird in der WO 2003/083553 A2 (Silhouette International Schmied AG) beschrieben, worin jeweils zwei Kunststoffhülsen einen den Bohrungsrand übergreifenden Kopf, welcher ebenfalls als Verbindungssteg dient, aufweisen.

Bei allen hier beschriebenen Verfahren, ist das Konstruktionsteil in direktem Kontakt mit der Oberfläche des Brillenglases, um die Verbindung zu stabilisieren. Sobald das Konstrukteil aus einem Werkstoff besteht, welcher härter als das Material des Brillenglases ist, besteht die Gefahr, dass das Brillenglas beschädigt werden könnte.

### Darstellung der Erfindung

Aufgabe der vorliegenden Erfindung ist es, eine Brillenglasbefestigung für die Befestigung eines Konstruktionsteils an einem Brillenglas dahingehend weiterzuentwickeln, dass sich eine Verbindung ergibt, welche sich während des Gebrauchs nicht von selber lösen oder lockern kann.

Die Aufgabe wird gelöst durch eine Brillenglasbefestigung gemäss Patentanspruch 1 und ein Verfahren zur Befestigung eines Konstruktionsteils an einem Brillenglas gemäss Anspruch 4.

Die Brillenglasbefestigung besteht aus einem Konstruktionsteil, z. B. einem Bügel, einer Brücke oder einem damit verbundenen Befestigungselement, und einer Hülse, wobei die Hülse in ein Langloch eines Brillenglases einschiebbar ist und ein Ende des Konstruktionsteils in die Hülse einschiebbar ist, so dass eine Rastverbindung mit Presspassung gebildet wird.

Das Brillenglas wird so hergestellt oder nach der Herstellung dahingehend bearbeitet, dass es ein Langloch mit zweckmässigen Ausmassen aufweist. Dieses Langloch dient als Aufnahme für die Hülse und mittelbar für das Ende des Konstruktionsteils.

Von der Vorderfläche des Brillenglases wird die Hülse in das Langloch eingeführt. Von der rückflächigen Brillenglasseite wird das Konstruktionsteil in die Hülse eingeführt.

Die Hülse umfasst auf einer Seite einen Anschlagkopf, welcher in den Ausmassen grösser ist als die Ausmasse des Langlochs und somit am Brillenglas anschlägt.

Das Konstruktionsteil ist formal so ausgearbeitet, dass sich beim Zusammenführen die Hülse durch die unterschiedlichen Eigenschaften der Materialien verformt. Zunächst verhaken sich dabei die widerhakenähnlichen Auswölbungen der Befestigungsstifte in der Hülse und dann wird ein wulstartiger Abschlussrand gebildet.

Der Anschlagkopf der Hülse dient als Barriere an der Vorderfläche des Brillenglases und der wulstartig gebildete Abschlussrand an der rückflächigen Seite des Brillenglases. Diese Abschlüsse verhindern, dass die Hülse durch die Bohrung hindurch gezogen werden kann.

Eine solche Befestigung an einem Brillenglas besitzt den Vorteil einer leichten Montage der zusammengehörigen Bauteile. Durch die Steckverbindung, welche sich nicht selbstständig lösen kann, ist die Verbindung sehr dauerhaft und extrem wartungsarm. Das Lockerwerden einer Schraubverbindung durch Bewegung wird dadurch umgangen. Durch die formschlüssige Verbindung von Konstruktionsteil und Hülse sowie der besonderen Geometrie des Langlochs kann sich die Spannung, welche das Konstruktionsteil über die Hülse auf das Glas abgibt, gleichmässig in alle Richtungen verteilen. Zudem stabilisiert der wulstartige Abschlussrand die Verbindung auf der innen liegenden Seite, was den Vorteil hat, dass das Konstruktionsteil keinen direkten Kontakt mit dem Brillenglas hat und so zusätzliche Spannung verhindert.

Die Steckverbindung ist optimiert für Konstruktionsteile aus einem flachen Material. Da das Konstruktionsteil von hinten an das Brillenglas befestigt wird, ist die Trageposition der Brille bei allen Brillenglasdicken gleich. Ausserdem ist das Konstruktionsteil an der fertig montierten Brille weniger ausladend, da es nicht von vorne um das Glas geführt werden muss.

Das Konstruktionsteil weist parallele Befestigungsstifte mit widerhakenähnlichen Auswölbungen auf.

Im Folgenden wird die vorliegende Erfindung anhand von Figuren und Beispielen näher erläutert. Im Einzelnen zeigt:

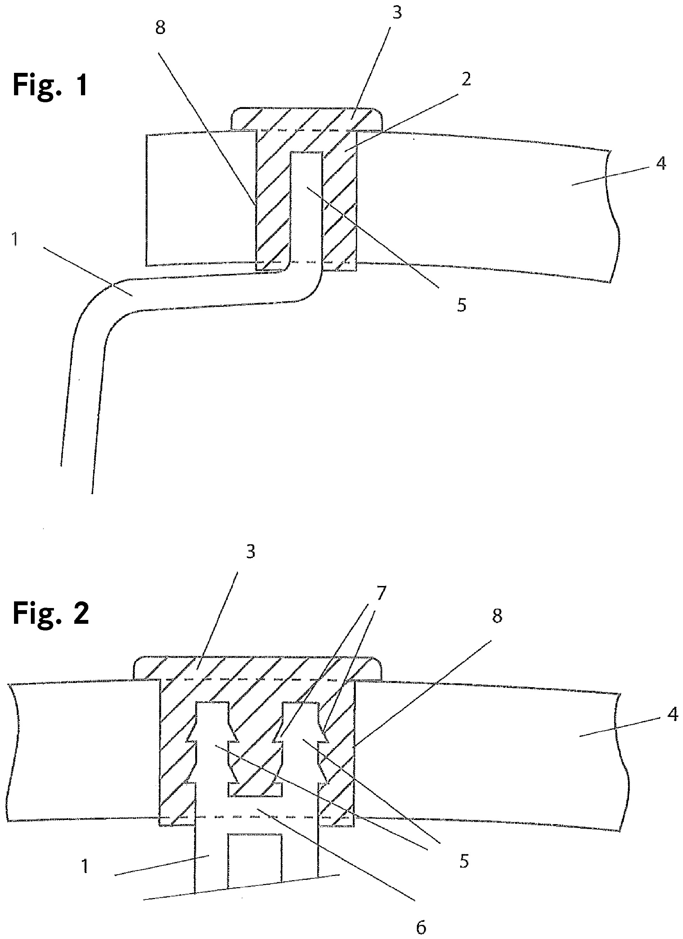

Figur 1 die Komponenten einer Brillenglasbefestigung der vorliegenden Erfindung im Querschnitt im montierten Zustand.
Figur 2 die Komponenten der Brillenglasbefestigung im Längsschnitt im montierten Zustand.

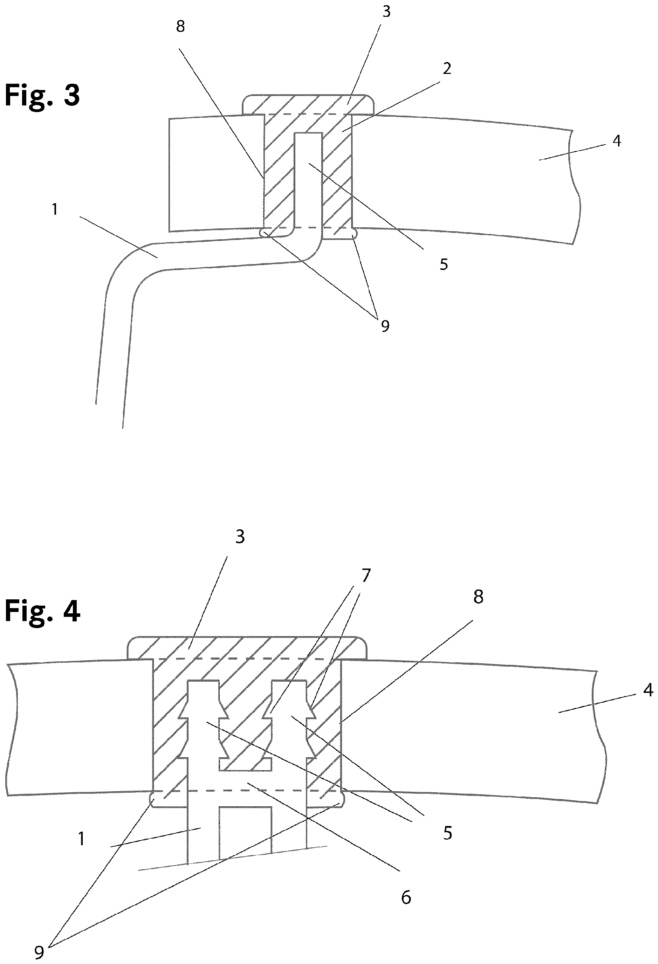

Figur 3 die Komponenten der Brillenglasbefestigung im Querschnitt im montierten Zustand, unter expliziter Darstellung des wulstartigen Abschlussrands.
Figur 4 die Komponenten der Brillenglasbefestigung im Längsschnitt im montierten Zustand, unter expliziter Darstellung des wulstartigen Abschlussrands.

### Wege zur Ausführung der Erfindung

Die Brillenglasbefestigung besteht aus einem Konstruktionsteil 1 und einer Hülse 2. Diese beiden Teile werden in einem Langloch 8 im Brillenglas 4 so ineinander verkeilt, dass sie eine Rastverbindung mit Presspassung bilden.

Das Ende des Konstruktionsteils 1 besteht aus parallelen Befestigungsstiften 5, welche mit widerhakenähnlichen Auswölbungen 7 versehen sind.

Die Hülse 2 wird von der vorderflächigen Seite des Brillenglases so weit in das Glas eingeführt bis der Anschlagkopf 3 kein weiteres Einführen mehr ermöglicht.

Durch die Auswahl der korrekten Länge oder durch Ablängen der Hülse 2 verbleibt diese etwas länger als das Brillenglas 4 an der Position des Langlochs 8 dick ist.

Das Konstruktionsteil 1 ist formal so ausgearbeitet, dass der Befestigungssteg 6 in der eingeführten Position direkt mit der rückflächigen Seite der Hülse 2 abschliesst.

Durch die Presspassung zwischen Konstruktionsteil 1 und Hülse 2 im Langloch 8 des Brillenglases 4 rasten die widerhakenähnlichen Auswölbungen 7 des Konstruktionsteils 1 im Material der Hülse 2 ein.

Die formale Ausarbeitung der widerhakenähnlichen Auswölbungen 7 ermöglicht nur eine Zugbewegung von der vorderflächigen Seite zur rückflächigen Seite des Brillenglases 3. Bei Zugbewegung in der Gegenrichtung verkeilen sich die widerhakenartigen Auswölbungen 7 des Konstruktionsteils 1 in der Hülse 2.

Der Anschlagkopf 3 blockiert die Hülse an der vorderflächigen Seite des Brillenglases 4. Durch die formschlüssige Verbindung zwischen Konstruktionsteil 1, Hülse 2 und Brillenglas 4 wird die Hülse 2 gedehnt, wodurch eine Presspassung entsteht.

Durch die Verdrängung von Material der Hülse 2 durch den Befestigungssteg 6 entsteht beim über den Rand des Brillenglases 4 überstehenden Teil der Hülse ein wulstartiger Abschlussrand 9, welcher vorteilhafte Befestigungsbedingungen schafft.

Das Konstruktionsteil 1 und die Hülse 2 bilden zusammen im eingerasteten Zustand eine Verbindung, welche satt im Langloch 8 des Brillenglases 4 eingesetzt ist.

## Patentansprüche

1. Brillenglasbefestigung, bestehend aus einem Konstruktionsteil (1) und einer Hülse (2), wobei die Hülse (2) in ein Langloch (8) eines Brillenglases (4) einschiebbar ist und ein Ende des Konstruktionsteils (1) in die Hülse (2) einschiebbar ist, so dass eine Rastverbindung mit Presspassung gebildet wird, wobei die Hülse (2) auf einer Seite einen Anschlagkopf (3) aufweist, welcher in den Ausmassen grösser ist als die Ausmasse des Langlochs (8) und somit am Brillenglas (4) anschlägt,
**dadurch gekennzeichnet, dass**
das Konstruktionsteil parallele Befestigungsstifte (5) mit widerhakenähnlichen Auswölbungen (7) aufweist, und dass
die Hülse (2) auf der gegenüberliegenden Seite des Anschlagkopfs (3) einen durch Verdrängung von Material der Hülse (2) beim Einschub des Konstruktionsteils (1) gebildeten wulstartigen Abschlussrand (9) aufweist, wobei die Verdrängung von Material durch einen die parallelen Befestigungsstifte (5) verbindenden Befestigungssteg (6) beim über den Rand des Brillenglases (4) überstehenden Teil der Hülse (2)) erfolgt, und wobei der Befestigungssteg (6) in der eingeführten Position direkt mit einer rückflächigen Seite der Hülse (2) abschliesst.

2. Brillenglasbefestigung nach Anspruch 1, **dadurch gekennzeichnet, dass** die Hülse (2) in das Langloch (8) von einer Vorderfläche des Brillenglases (4) einschiebbar ist und das Konstruktionsteil (1) einer der Vorderfläche gegenüberliegenden Seite in die Hülse (2) einschiebbar ist.

3. Brille mit einem Brillenglas (4) und einer Brillenglasbefestigung nach einem der Ansprüche 1 bis 2.

4. Verfahren zur Befestigung eines Konstruktionsteils an einem Brillenglas, welches folgende Schritte umfasst:
a) Einschieben einer Hülse (2) in ein Langloch (8) des Brillenglases (4), wobei die Hülse (2) auf einer Seite einen Anschlagkopf (3) aufweist, welcher in den Ausmassen grösser ist als die Ausmasse des Langlochs (8) und somit am Brillenglas (4) anschlägt;
b) Einschieben des Konstruktionsteils (1) in die Hülse (2), wobei das Konstruktionsteil parallele Befestigungsstifte (5) mit widerhakenähnlichen Auswölbungen (7) aufweist,
**dadurch gekennzeichnet, dass**
das Einschieben des Konstruktionsteils (1) Material der Hülse (2) derart verdrängt, dass auf der gegenüberliegenden Seite des Anschlagkopfs (3) ein wulstartiger Abschlussrand (9) gebildet wird, wobei die Verdrängung von Material durch einen die parallelen Befestigungsstifte (5) verbindenden Befestigungssteg (6) beim über den Rand des Brillenglases (4) überstehenden Teil der Hülse (2) erfolgt, und wobei der Befestigungssteg (6) in der eingeführten Position direkt mit einer rückflächigen Seite der Hülse (2) abschliesst.

5. Verfahren nach Anspruch 4, **dadurch gekennzeichnet, dass** das Einschieben der Hülse (2) von einer Vorderfläche des Brillenglases (4) erfolgt und das Einschieben des Konstruktionsteils (1) in die Hülse von einer gegenüberliegenden Seite erfolgt.

## Claims

1. Ophthalmic lens fastening, comprising a structural part (1) and a sleeve (2), wherein the sleeve (2) is slidable into an elongated hole (8) of an ophthalmic lens (4) and one end of the structural part (1) is slidable into the sleeve (2) such that a latching connection with a press fit is formed, wherein on one face, the sleeve (2) comprises a stop head (3) which is greater in dimension than a dimension of the elongated hole (8) and consequently bears against the ophthalmic lens (4),
**characterized in that**
the structural part comprises parallel fastening pins (5) with barb-like bulges (7), and **in that**
on another face situated oppositely to the face of the stop head (3), the sleeve (2) comprises a bead-like rim (9) that is formed as a result of displacement of material of the sleeve (2) when the structural part is inserted, wherein the displacement of material is made by a fastening web (6) at a part of the sleeve (2) which projects above the edge of the ophthalmic lens (4), wherein the fastening web (6) is connecting the two parallel fastening pins (5), and wherein the fastening web (6) in the inserted position closes directly with a rear face of the sleeve (2).

2. Ophthalmic lens fastening according to claim 1, **characterized in that** the sleeve (2) is slidable into the elongated hole (8) from a front face of the ophthalmic lens (4) and the structural part (1) is slidable into the sleeve (2) from a face that is located opposite the front face.

3. Spectacles having an ophthalmic lens (4) and an ophthalmic lens fastening according to one of claims 1 to 2.

4. Method for fastening a structural part to an ophthalmic lens, said method comprising the following steps:
a) sliding a sleeve (2) into an elongated hole (8) of the ophthalmic lens (4), wherein on one face, the sleeve (2) comprises a stop head (3) which is greater in dimension than a dimension of the elongated hole (8) and consequently bears against the ophthalmic lens (4);
b) sliding the structural part (1) into the sleeve (2), wherein the structural part comprises parallel fastening pins (5) with barb-like bulges (7),
**characterized in that**
sliding in the structural part (1) displaces material of the sleeve (2) in such a manner that a bead-like rim (9) is formed on another face situated oppositely to the face of the stop head (3), wherein the displacement of material is made by a fastening web (6) at a part of the sleeve (2) which projects above the edge of the ophthalmic lens (4), wherein the fastening web (6) is connecting the two parallel fastening pins (5), and wherein the fastening web (6) in the inserted position closes directly with a rear face of the sleeve (2).

5. Method according to claim 4, **characterized in that** the sleeve (2) is slid in from a front face of the ophthalmic lens (4) and the structural part (1) is slid into the sleeve from an oppositely situated face.

## Revendications

1. Fixation de verre de lunettes constitué d'une pièce constructive (1) et d'une douille (2), la douille (2) pouvant être enfoncée dans un trou oblong (8) d'un verre de lunettes (4) et une extrémité de la pièce constructive (1) pouvant être enfoncée dans la douille (2) de telle sorte qu'il se forme une connexion par encliquetage avec ajustement serré, la douille (2) présentant d'un côté une tête de butée (3) qui présente des dimensions supérieures à la dimension du trou oblong (8) et qui bute ainsi contre le verre de lunettes (4),
**caractérisée en ce que**
la pièce constructive présente des goupilles de fixation parallèles (5) avec des parties en relief (7) similaires à des ardillons et **en ce que** la douille (2) présente sur le côté opposé de la tête de butée (3), un bord de terminaison (9) en forme de bourrelet formé par le repoussement du matériau de la douille (2) lors de l'enfoncement de la pièce constructive (1), le repoussement de matériau s'effectuant par une nervure de fixation (6) reliant les goupilles de fixation parallèles (5) avec la partie de la douille (2) fait saillie au-delà du bord du verre de lunettes (4), et la nervure de fixation (6) se terminant dans la position enfoncée directement avec un côté de face arrière de la douille (2).

2. Fixation de verre de lunettes selon la revendication 1, **caractérisée en ce que** la douille (2) peut être enfoncée dans le trou oblong (8) depuis une surface avant du verre de lunettes (4) et la pièce constructive (1) peut être enfoncée dans la douille (2) depuis un côté opposé à la surface avant.

3. Lunettes comprenant un verre de lunettes (4) et une fixation de verre de lunettes selon l'une quelconque des revendications 1 et 2.

4. Procédé de fixation d'une pièce constructive à un verre de lunettes qui comprend les étapes suivantes :
a) enfoncement d'une douille (2) dans un trou oblong (8) du verre de lunettes (4), la douille (2) présentant d'un côté une tête de butée (3) qui présente des dimensions supérieures à la dimension du trou oblong (8) et donc bute contre le verre de lunettes (4) ;
b) enfoncement de la pièce constructive (1) dans la douille (2), la pièce constructive présentant des goupilles de fixation parallèles (5) avec des parties en relief (7) similaires à des ardillons,
**caractérisé en ce que** l'enfoncement de la pièce constructive (1) repousse le matériau de la douille (2) de telle sorte qu'un bord de terminaison (9) en forme de bourrelet soit formé du côté opposé à la tête de butée (3), le repoussement de matériau s'effectuant par une nervure de fixation (6) reliant les goupilles de fixation parallèles (5) avec la partie de douille (2) fait saillie au-delà du bord du verre de lunettes (4), et la nervure de fixation (6) se terminant dans la position enfoncée directement avec un côté de face arrière de la douille (2).

5. Procédé selon la revendication 4, **caractérisé en ce que** l'enfoncement de la douille (2) s'effectue depuis une surface avant du verre de lunettes (4) et l'enfoncement de la pièce constructive (1) dans la douille s'effectue depuis un côté opposé.
